# EUROPEAN PATENT APPLICATION

(11) **EP 2 256 755 A2**
(43) Date of publication of application: **01.12.2010**
(21) Application number: 10163686.8
(22) Date of filing: 24.05.2010
(51) Int. Cl.: H01F 27/28

(54) **Coil and its manufacturing method**

(30) Priority: 29.05.2009 FI 20095599; 17.12.2009 FI 20096346
(71) Applicant: ABB Oy, 00380 Helsinki (FI)
(72) Inventor: Seväkivi, Pertti, 01830 Lepsämä (FI); Talja, Markku, 04400 Järvenpää (FI)
(74) Representative: Valkeiskangas, Tapio Lassi Paavali

(57) **Abstract**

A method for manufacturing a coil, and a coil comprising electrically conductive winding wire (10a, 10b) wound in turns around a core (40) in one or more layers, the surface of the winding wire (10a, 10b) being provided with at least one groove (20a, 20b) in the direction of the longitudinal axis of the winding wire; and at least one cooling tube (30a, 30b) which enables coolant circulation and is positioned in the groove of the winding wire (10a, 10b), being at least partly embedded therein, wherein the groove (20a) formed on the surface of the winding wire (10a) of the outermost winding wire layer relative to the core (40) opens away from the core (40), the cooling tube (30a) in the groove being placed around said outermost winding wire layer and covering it at least partly.

## Description

### FIELD OF THE INVENTION

The invention relates to manufacturing a coil and to a coil structure.

### BACKGROUND OF THE INVENTION

A coil is an electrotechnical structure that is formed by winding an electrically conductive conductor, i.e. winding wire, in turns. Coils are employed in connection with a plurality of electromagnetic and electromechanical devices. Examples of these devices include a choke, a transformer, a motor and a generator, all of which comprise one or more coils.

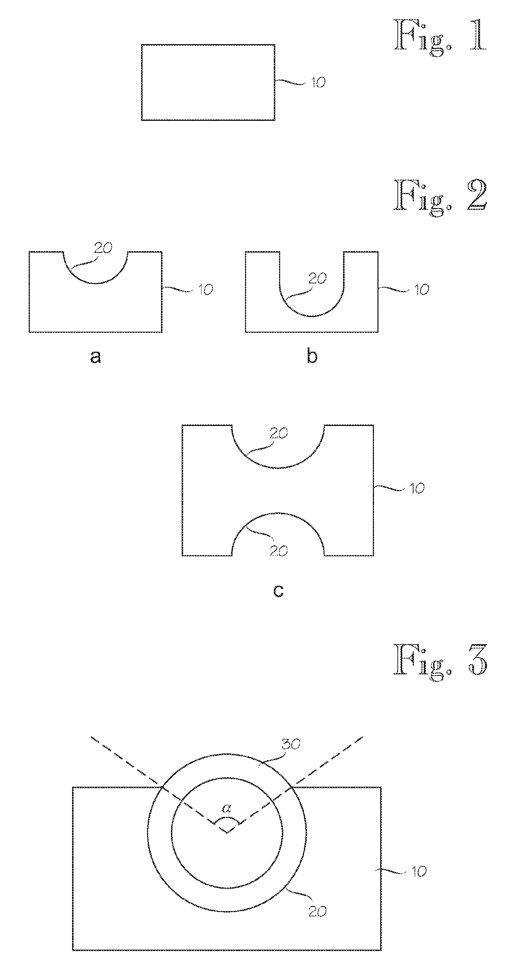

A winding wire may be of any electrically conductive material, but typically various metal materials, such as copper and aluminium or alloys thereof, are used, depending on the application for which the coil is intended. On the surface of the winding wire there is also typically an insulating layer, such as a varnish, in particular if the turns in the coil come into contact with one another. The cross section of the winding wire may be round or rectangular, for instance. Figure 1 shows the cross section of a rectangular winding wire 10.

When the coil is in use, an electric current passes therethrough and causes losses, which in turn heat the coil. In general, the coil is cooled down by air cooling, whereby excessive heat is conducted and radiates from the coil surfaces to the vicinity. Air cooling may be enhanced, when necessary, by means of a fan. However, air cooling of this kind does not provide a sufficient cooling effect in all conditions and applications. In addition, heat conducted and radiating from the coil to the vicinity may be harmful to other devices or structures in the vicinity of the coil, which may further increase the necessary cooling effect.

Publication US 6,741,152 discloses a solution for cooling a coil. In the solution disclosed in the publication cooling channels or cooling tubes, in which a coolant flows are placed, inside coil conductors, which consist of at least two profiled conductor segments, or inside stranded conductors. Even though it is possible to cool the coil by the disclosed solution, the solution does not necessarily reduce heat conduction and radiation to the vicinity of the coil.

### BRIEF DESCRIPTION OF THE INVENTION

The object of the invention is to provide a method and an apparatus such that the above-mentioned problem may be solved or at least alleviated. This is achieved by a method and a coil, which are characterized by what is stated in independent claims 1 and 6. The preferred embodiments of the invention are disclosed in the dependent claims.

The invention is based on the idea that a winding wire, whose outer surface is provided with a groove substantially in the direction of the longitudinal axis of the winding wire for receiving a cooling tube at least partly, is wound into an outermost winding wire layer relative to a coil core such that the groove provided in the surface of the outermost winding wire layer opens substantially away from the core, i.e. substantially outwardly from the coil, whereby the cooling tube placed in said groove is positioned around said outermost winding wire layer and covers it at least partly.

The invention has an advantage that the cooling tube locating on the outer edge of the coil and covering at least partly the heat-generating winding wires effectively reduces heat conduction and radiation from the winding wires into the vicinity of the coil and consequently reduces the need for cooling the space surrounding the coil. For instance, if the coil is located in an enclosed space, such as a device box, the need for cooling such a space is reduced. In addition, the cooling of the actual coil is enhanced, when the coolant flow is made possible also at least partly inside the winding wire. The solution of the invention is simple to implement and it may be utilized in connection with both liquid cooling and gas cooling.

### BRIEF DESCRIPTION OF THE DRAWINGS

In the following, the invention will be described in greater detail in connection with preferred embodiments, with reference to the attached drawings, in which
Figure 1 is a cross-sectional view of a winding wire;
Figure 2 shows cross-sectional views of a winding wire in accordance with alternative embodiments;
Figure 3 is a cross-sectional view of a winding wire in accordance with an embodiment;
Figure 4 shows a coil in accordance with an embodiment;
Figure 5 shows a coil in accordance with an embodiment; and
Figure 6 shows a cross-sectional view of winding wires in accordance with an embodiment.

### DETAILED DESCRIPTION OF THE INVENTION

Figure 2 shows three cross sections a, b and c of a winding wire 10, which is provided with one or more grooves 20 in accordance with different embodiments. It is to be noted that the appearance of the cross section of the winding wire may deviate from the rectangular shape shown in the figures and it may be, for instance, round, rounded at the corners, triangular or of any other shape without deviating from the basic idea of the invention. Further, the dimensions of the winding wire may be changed, when necessary. The groove 20 may be provided in the winding wire 10 already during manufacturing or in a subsequent, separate step. On the outer surfaces of the winding wire 10 there may be provided an enamel varnish insulating the turns or another insulating layer. The material of the winding wire is not relevant to the basic idea of the invention and it may be metal, such as copper or aluminium, or some other electrically conductive material, depending on the use. In Figure 2, the cross section a shows a winding wire on one exterior face of which there is provided a substantially semicircular groove 20. The groove extends preferably throughout the entire length of the winding wire substantially in the direction of the longitudinal axis of the winding wire. In Figure 2, the cross section b, in turn, shows a winding wire on one exterior face of which there is provided a deepened groove having a semicircular bottom. It is to be noted that the cross- sectional shape of the groove 20 may deviate from the examples shown in the figures and, for instance, its shape may be at least partly a circular arch, a rectangle, a v-shape or some other shape. The number of grooves 20 may also be more than one. In Figure 2, the cross section c shows a winding wire 10 with grooves 20 provided on the two mutually opposite exterior faces thereof. The purpose of the groove or grooves 20 is to enable placement of a cooling tube, which enables circulation of a coolant, at least partly inside the winding wire 10. Preferably, the cross-sectional shape of the outer surface of the cooling tube corresponds at least partly the shape of the inner surface of the groove 20, whereby heat is best transmitted from the winding wire to the coolant flowing inside the cooling tube. The cooling tube may be made of a deformable material. The cooling tube may be made of metal material, plastic material, rubber material or a combination thereof, for instance. The coolant, in turn, may be a liquid substance, such as water, or a gaseous substance, such as air. When a metal cooling tube is used, the cooling liquid becomes live unless deionized liquid is used.

In accordance with an embodiment, the cross section of said at least one groove 20 in the winding wire 10 is substantially a circular arch in shape such that the central angle corresponding to the circular arch exceeds 180 degrees, whereby the groove locks the cooling tube inserted in the groove into place. An advantage of the locking is, for instance, that the cooling tube may be mounted, if so desired, in the groove of the winding wire in a preliminary step already, prior to the actual winding. In Figure 3, the cross section shows a winding wire 10 in which the provided groove 20 is a circular arch in shape such that the central angle α corresponding to the circular arch exceeds 180 degrees. In that case the groove 20 locks the cooling tube 30 inserted in the groove into place. The central angle corresponding to the groove may vary within the range of 180° < α < 360°, if it is desired to be locking. An appropriate value of the central angle corresponding to the groove may be, for instance, about 90 degrees like in the example of Figure 3. The larger the central angle, the more efficient the locking. On the other hand, the mounting of the tube 30 into the groove 20 is the easier, the smaller the central angle. Thus, the appropriate width of the central angle α should be selected, for instance, on the basis of the elasticity of the material of the cooling tube 30 and/or other component characteristics.

According to an embodiment of the invention, a coil is formed of a grooved winding wire by mounting a cooling tube 30, which enables coolant circulation, in a groove 20 provided on the outer surface of the winding wire 10 such that the cooling tube will be embedded at least partly in said groove and the winding wire 10 and the cooling tube 30 are wound in turns around the core in one or more layers. The outermost layer of the winding wire 10 relative to the core is preferably wound such that the groove 20 provided in the surface of the winding wire in the outermost winding wire layer opens away from the core, whereby the cooling tube 30 placed in said groove is positioned around said outermost winding wire layer and covers it at least partly. According to an embodiment, the mounting of the cooling tube 30 into the groove 20 of the winding wire 10 takes place prior to the winding in turns. According to a second embodiment, the mounting of the cooling tube 30 into the groove 20 of the winding wire 10 takes place substantially simultaneously with the winding in turns.

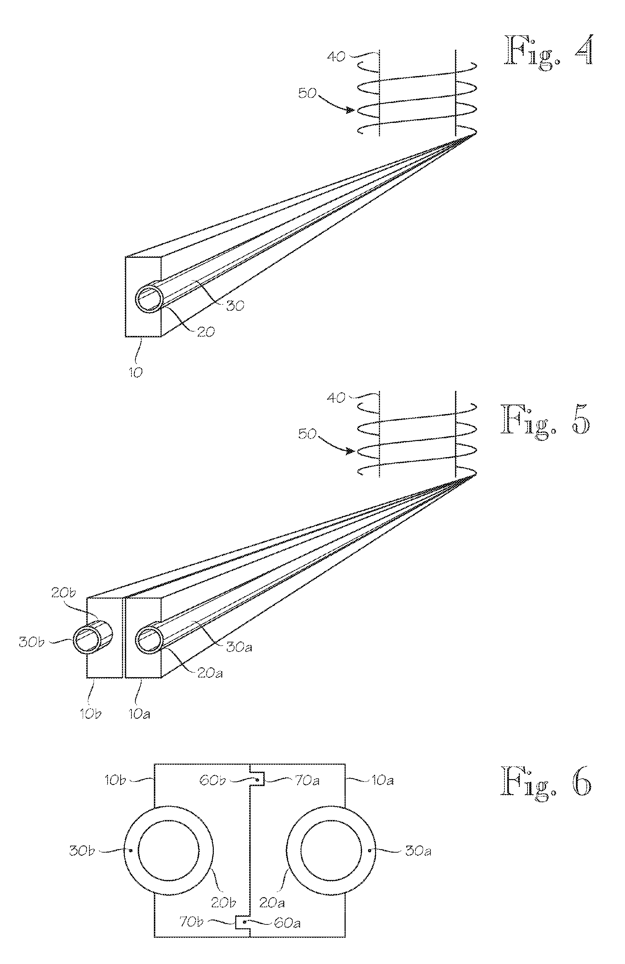

Figure 4 shows an example of a coil 50 which comprises turns of winding wire 10 wound around a core 40. In the surface of the winding wire 10 there is provided a groove 20. Further, the coil 50 comprises a cooling tube 30 which runs in the groove 20 and is partly embedded therein. The groove 20 may have any of the shapes shown in Figures 2 or 3 or some other shape. The exact structure of the coil, such as the material of the core 40, is not relevant to the basic idea of the invention, but it is selected accord ing to the use. The core 40 may be an air core or made of magnetic material. The optional air core may comprise an appropriate support structure, around which the winding wires 10 are wound. In the example of Figure 4, the coil 50 comprises just one layer of winding wire 10 around the core 40, and consequently this single winding wire layer constitutes at the same time the outermost winding wire layer relative to the core 40. A groove 20 provided in the surface of this outermost winding wire layer relative to the core 40 opens away from the core 40, whereby the cooling tube 30 placed in the groove is positioned around the outermost winding wire layer and covers it partly. When the cross section of the winding wire 10 is rectangular, as in the example of the figure, the groove 20 in the outermost winding wire layer is located on the side of the wire facing away from the core 40 and thus the groove opens away from the core. The proportion of the widths of the grooved side of the winding wire 10 and of the cooling tube 30 may differ from those shown in the figure and the cooling tube may be narrower or wider than the one shown in the figure. If the cooling tube 30 is at least as wide as the grooved side of the winding wire 10, the cooling tube may cover the outermost winding wire layer even completely, whereby heat conduction and radiation from the winding wires to the vicinity will be reduced as effectively as possible. The coil 50 may comprise more than one winding wire layer, which layers are placed between the outermost winding wire layer of the figure and the core. Likewise, there may be a plurality of cooling tubes 30.

According to an embodiment of the invention at least two layers of winding wire and cooling tube are wound in turns around the core. In that case the innermost layer of the winding wire relative to the core is preferably wound such that a groove provided in the surface of said innermost winding wire layer opens towards to the core, whereby the cooling tube in said groove will be placed between the innermost winding wire layer and the core. Figure 5 shows an example of a coil 50 that comprises wire turns in two layers wound of winding wires 10a and 10b around the core 40. In the surfaces of the winding wires 10a and 10b there are provided grooves 20a and 20b. The coil 50 further comprises cooling tubes 30a and 30b, which run in the grooves 20a and 20b. The groove 20a provided in the surface of the winding wire 10a in the outermost winding wire layer relative to the core 40 opens away from the core. Correspondingly, the groove 20b provided in the surface of the winding wire 10b in the innermost winding wire layer relative to the core 40 opens towards the core 40, whereby the cooling tube 30b placed in said groove is positioned between the innermost winding wire layer and the core. The core material may comprise appropriate cuts or grooves (not shown), in which the innermost cooling tube 30b will be partly embedded. The coil 50 could comprise more than two winding wire layers, which are positioned between the outermost and the innermost winding wire layers shown in the figure. Likewise, there may be more than two cooling tubes. The grooves in the winding wires of different winding wire layers 10a, 10b may also be different. The coil as the one shown in the example of Figure 5 may be produced by winding all four components, i.e. both winding wires 10a and 10b as well as both cooling tubes 30a and 30b, substantially simultaneously around the coil core 40. Alternatively, first the inner cooling tube 30b may be wound around the core 40 and thereafter the winding wires 10a and 10b are wound together or separately on the inner cooling tube, and finally, the outermost cooling tube 30a is wound on the winding wires.

According to an embodiment of the invention, said at least one groove, which holds the cooling tube, is provided on one side of the winding wire and on the opposite side of the winding wire there is provided at least one second groove and/or at least one rib. Figure 6 shows an example, where that side of the winding wires 10a and 10b which is opposite to the one comprising the groove 20a, 20b for receiving the cooling tube 30a 30b is provided with second grooves 70a and 70b and ribs 60a and 60b. When the winding wires 10a and 10b are wound in two layers such that the sides of winding wires in different layers, which sides are provided with the at least one second groove 70a and 70b and/or the at least one rib 60a and 60b, are facing one another, as shown in Figure 6, the ribs advantageously extend into the second grooves thus mutually aligning the winding wires in different layers. It is also possible that just one winding wire 10a or 10b comprises a second groove 70a or 70b, and correspondingly, just one of the winding wires 10a or 10b comprises a rib 60a or 60b, by means of which the winding wires are mutually aligned in winding. There may also be more than two grooves and/or ribs and their locations may deviate from what is presented above.

It is apparent to a person skilled in the art that as technology advances the basic idea may be implemented in a variety of ways. Thus, the invention and the embodiments thereof are not limited to the above-described examples, but they may vary within the scope of the claims.

## Claims

1. A method for manufacturing a coil comprising electrically conductive winding wire (10; 10a, 10b), the method comprising:
placing a cooling tube (30; 30a, 30b), which enables coolant circulation, in a groove (20; 20a, 20b) provided in the surface of the winding wire (10; 10a, 10b) and running substantially in the direction of the longitudinal axis of the winding wire such that the cooling tube will be embedded at least partly in said groove; and
winding the winding wire (10; 10a, 10b) and the cooling tube (30) in turns around a core (40) in one or more layers;
**characterized by** winding an outermost winding wire layer (10; 10a) relative to the core such that the groove (20; 20a) provided in the surface of said outermost layer of the winding wire opens away from the core (40), whereby the cooling tube (30, 30a) placed in said groove is positioned around said outermost winding wire layer and covers it at least partly.

2. The method of claim 1, **characterized in that** the placement of the cooling tube (30; 30a, 30b) in the groove (20; 20a, 20b) of the winding wire (10; 10a, 10b) is carried out prior to winding in turns.

3. The method of claim 1, **characterized in that** the placement of the cooling tube (30; 30a, 30b) in the groove (20; 20a, 20b) of the winding wire (10; 10a, 10b) is carried out substantially simultaneously with winding in turns.

4. The method of claim 1, 2 or 3, **characterized in that** said at least one groove (20; 20a, 20b) is provided substantially throughout the entire length of the winding wire (10; 10a, 10b).

5. The method of any one of claims 1 to 4, **characterized by** winding the wire (10; 10a, 10b) and the cooling tube (30) in turns around the core (40) at least two layers, the innermost layer of the winding wire (10b) relative to the core (40) being wound such that the groove (20b) provided in the surface of the winding wire in the innermost layer opens towards the core (40), the cooling tube (30b) placed in said groove being positioned between the innermost winding wire layer and the core.

6. A coil comprising:
an electrically conductive winding wire (10; 10a, 10b) which is wound in turns around a core (40) in one or more layers and in the surface of which winding wire (10; 10a, 10b) there is provided at least one groove (20; 20a, 20b) running in the direction of the longitudinal axis of the winding wire; and
at least one cooling tube (30; 30a, 30b), which enables coolant circulation and which is located in the groove (20; 20a, 20b) of the winding wire (10; 10a, 10b) and embedded at least partly therein, **characterized in that**
the groove (20; 20a, 20b) provided in the surface of the outermost layer of the winding wire relative to the core (40) opens away from the core (40), the cooling tube (30, 30a) placed in said groove being positioned around said outermost winding wire layer and covering it at least partly.

7. The coil of claim 6, **characterized in that** said at least one groove (20; 20a, 20b) is provided substantially throughout the entire length of the winding wire (10; 10a, 10b).

8. The coil of claim 6 or 7, **characterized by** the winding wire (10; 10a, 10b) and the cooling tube (30; 30a, 30b) being wound in at least two layers around the core (40) such that the groove (20b) provided in the surface of the winding wire (10b) in the innermost winding wire layer opens towards the core (40), the cooling tube (30b) placed in said groove being positioned between the innermost winding wire layer and the core.

9. The coil of claim 6, 7 or 8, **characterized in that** the cross section of said at least one groove (20; 20a, 20b) is at least partly a circular arch in shape.

10. The coil of any one of claims 6 to 9, **characterized in that** the exterior face of the cross sectional shape of the cooling tube (30; 30a, 30b) corresponds at least partly to the cross sectional shape of the groove (20; 20a, 20b).

11. The coil of claims 9 and 10, **characterized in that** the cross section of said at least one groove (20; 20a, 20b) is substantially a circular arch in shape such that the central angle corresponding to the circular arch exceeds 180 degrees, whereby the groove locks the cooling tube placed in the groove into place.

12. The coil of any one claims 6 to 11, **characterized in that** the cross section of the winding wire (10; 10a, 10b) is substantially rectangular in shape.

13. The coil of claim 12, **characterized in that** said at least one groove (20; 20a, 20b), which holds the cooling tube, is provided on one side of the winding wire (10; 10a, 10b) and on the opposite side of the winding wire there is provided at least one second groove (70a, 70b) and/or at least one rib (60a, 60b).

14. The coil of claim 13, **characterized by** the winding wire (10; 10a, 10b) being wound in two layers around the core (40) such that the sides of the winding wires in different layers which are provided with at least one second groove (70a, 70b) and/or at least one rib (60a, 60b) are facing one another, whereby the ribs extend into the second grooves mutually aligning the winding wires in different layers.

15. The coil of any one of claims 6 to 14, **characterized in that** the cooling tube (30; 30a, 30b) is made of deformable material.

16. The coil of any one of claims 6 to 15, **characterized in that** the cooling tube (30; 30a, 30b) is made of metal material, plastic material, rubber material or a combination thereof.

17. The coil of any one claims 6 to 16, **characterized in that** the coolant is a liquid substance or a gaseous substance.

18. The coil of any one of claims 6 to 17, **characterized in that** the core (40) of the coil (50) is an air core or made of magnetic material.
